# EUROPÄISCHE PATENTSCHRIFT

(11) **EP 3 737 919 B1**
(45) Veröffentlichungstag und Bekanntmachung des Hinweises auf die Patenterteilung: **15.12.2021**
(21) Anmeldenummer: 19700211.6
(22) Anmeldetag: 07.01.2019
(51) Int. Cl.: G01F 15/18, G01F 5/00, G01N 1/22, G01N 15/00, G01N 15/06

(54) **MESSANORDNUNG ZUR BESTIMMUNG EINES PARAMETERS EINES DURCH EINEN FLUIDSTRÖMUNGSKANAL STRÖMENDEN FLUIDEN MEDIUMS SOWIE FLUIDSTRÖMUNGSKANAL MIT EINER SOLCHEN MESSANORDNUNG**
MEASURING ARRANGEMENT FOR DETERMINING A PARAMETER OF A FLUID MEDIUM FLOWING THROUGH A FLUID FLOW CHANNEL AND FLUID FLOW CHANNEL WITH SUCH A MEASURING ARRANGEMENT
DISPOSITIF DE MESURE PERMETTANT DE DÉTERMINER UN PARAMÈTRE D'UN FLUIDE S'ÉCOULANT À TRAVERS UN CANAL D'ÉCOULEMENT DE FLUIDE ET CANAL D'ÉCOULEMENT DE FLUIDE AVEC UN TEL DISPOSITIF DE MESURE

(30) Priorität: 08.01.2018 DE 102018200171
(43) Veröffentlichungstag der Anmeldung: 18.11.2020
(73) Patentinhaber: Audi AG, 85049 Ingolstadt (DE)
(72) Erfinder: SCHMANDT, Bastian, 85051 Ingolstadt (DE); RÄTSCHER, Christian;, 85101 Lenting (DE); KRANZ, Jürgen, 85051 Ingolstadt (DE)
(86) Internationale Anmeldenummer: PCT/EP2019/050253
(87) Internationale Veröffentlichungsnummer: WO 2019/134998

(56) Entgegenhaltungen:
- EP-A2- 0 007 111
- WO-A2-00/45163
- DE-T5-112014 002 928
- DE-T5-112014 002 928
- GB-A- 2 293 884
- US-A- 4 131 011
- US-A1- 2017 058 735

## Beschreibung

Die Erfindung betrifft eine Messanordnung zur Bestimmung wenigstens eines Parameters eines durch einen Fluidströmungskanal strömenden fluiden Mediums. Ferner betrifft die Erfindung einen Fluidströmungskanal als Frischluftkanal einer Fahrzeugklimaanlage mit einer solchen Messanordnung.

Eine gattungsgemäße Messanordnung ist aus der US 4 131 011 A bekannt, wonach zur Bestimmung des Endpunkts eines Trocknungsvorganges eine Druckdifferenz in einem Hauptluftstrom genutzt wird, um einen über einen Feuchtigkeitssensor geführten Bypassluftstrom zu erzeugen, der wieder in den Hauptluftstrom zurückgeführt wird. Die Druckdifferenz wird zwischen einer entgegen der Strömungsrichtung des Hauptluftstroms gerichteten Einlassöffnung einer zum Feuchtigkeitssensor führenden Fluidleitung und einer in einem domförmigen Hohlkörper angeordneten Auslassöffnung erzeugt, wobei der domförmige Hohlkörper mit seiner offenen Seite ebenso entgegen der Strömungsrichtung des Hauptluftstroms gerichtet ist und die Auslassöffnung über eine weitere Fluidleitung mit dem Feuchtigkeitssensor verbunden ist. Der Hohlkörper ist stromabwärts des Hauptluftstroms beabstandet zur Einlassöffnung der zum Feuchtigkeitssensor führenden Fluidleitung in dem Hauptluftstrom angeordnet.

Aus der US 2017/058735 A1 ist eine Messanordnung mit einem Partikelsensor bekannt, welcher stromabwärts eines Dieselpartikelfilters in einer Abgasanlage eines Kraftfahrzeugs angeordnet ist. Dieser Partikelsensor befindet sich in einem Abgasrohr des Kraftfahrzeugs, welches bezüglich dessen Längserstreckung ausgehend von einer Seitenwand des Abgasrohres senkrecht zur Strömungsrichtung eines Abgasstromes in demselben angeordnet ist. Über eine offene Stirnseite des Schutzrohres, welche in senkrechter Richtung zur Strömungsrichtung des Abgasstromes gerichtet ist, strömt ein Teil des Abgasstromes als Messstrom in das Schutzrohr ein, wird zunächst über den Partikelsensor geführt und anschließend über eine senkrecht zur Strömungsrichtung des Abgasstromes ausgerichtete Auslassöffnung des Schutzrohres wieder zurück in das Abgasrohr geführt. Damit der über den Partikelsensor geführte Messstrom unabhängig vom Abgasvolumenstrom ist, ist an der offenen Stirnseite des Schutzrohres eine Schwenkklappe angeordnet, so dass in Abhängigkeit der Stellung dieser Schwenkklappe eine Öffnung zur Steuerung eines über diese Öffnung in das Schutzrohr eintretenden Abgasstroms einstellbar ist.

Die Stirnseite des Schutzrohres der Messanordnung gemäß der US 2017/058735 A1 ist derart abgeschrägt ausgebildet, dass die anströmseitige Rohrwand kürzer ist als die abströmseitige Rohrwand. Am freien Ende der anströmseitigen Rohrwand ist die Schwenkplatte angelenkt. Aufgrund der gegenüber der anströmseitigen Rohrwand längeren abströmseitigen Rohrwand trifft ein Teil des Abgasstromes direkt auf einen Endbereich der abströmseitigen Rohrwand, so dass entsprechend der Stellung der Schwenkklappe ein Teil des auftreffenden Abgasstromes in die Öffnung eintreten kann. Nach dem Eintritt eines Teils des Abgasstromes in das Schutzrohr, wird dieser Teilstrom über zwei Strömungsumlenker zum Partikelsensor geleitet, welcher in dem Schutzrohr an demjenigen Ende desselben angeordnet ist, welches der die Schwenkklappe aufweisenden Stirnseite gegenüberliegt.

Die DE 11 2014 002 928 T5 beschreibt eine Gassensorvorrichtung, die das Verstopfen einer Gasansaugöffnung durch Partikel, Tröpfchen o. Ä. eines Gases und Erhalten der Messgenauigkeit über einen langen Zeitraum sicherstellt. Die Gassensorvorrichtung besteht aus einem Gehäuse mit einer Expansionskammer, die über eine Gasansaugöffnung mit einem Gasansaugkanal verbunden ist, und einer Messkammer, die über ein Verbindungsteil mit der Expansionskammer verbunden ist. Mittels einer die Gasansaugöffnung und das Verbindungsteil umfassenden und zusammenpressenden Struktur wird das in die Messkammer einströmende Gas 2-stufig ausgedehnt, so dass die Bewegung des Gases in der Messkammer abnimmt und damit die Messgenauigkeit beibehalten wird, auch wenn die Kapazität der Gasansaugöffnung durch dieselbe verstopfende Partikel oder Tröpfchen abnimmt.

Gemäß der WO 00/45163 weist ein einen Sensor aufweisendes Mikrosensorgehäuse einen Eingang und eine zwischen dem Eingang und dem Sensor angeordnete Prallplatte auf, wobei die Prallplatte eine einstufige, zu dem Sensor konzentrische Prallplatte ist, die einen ersten Bereich, der den Sensor überlappt und der keine Öffnung darin aufweist, und einen zweiten Bereich umfasst, der um den Sensor vorsteht und der zumindest eine Öffnung darin aufweist.

Die DE 10 2011 077 682 A1 beschreibt eine Vorrichtung zur Bestimmung wenigstens eines Parameters eines in einer Hauptströmungsrichtung strömenden fluiden Mediums, wie bspw. Ansaugluft in einem Ansaugtrakt einer Brennkraftmaschine eines Fahrzeugs. Als zu bestimmende Parameter werden physikalische oder chemische Parameter, insbesondere Strömungsgeschwindigkeit, Massenstrom oder Volumenstrom angeführt. Bei dieser bekannten Vorrichtung erfolgt die Anströmung eines Sensors in einem Staupunkt der Fluidströmung und damit bei hohem Druck, während die Abströmung an einer Seitenwand der Vorrichtung mit niedrigem Druck stattfindet. Damit wird der Sensorvolumenstrom aus der Fluidumströmung der Vorrichtung gefördert und ist damit abhängig von der Anströmgeschwindigkeit der Vorrichtung.

Würde eine solche Vorrichtung zur Bestimmung der Luftqualität in der Luftansaugung einer Fahrzeugklimaanlage verwendet, wäre aufgrund der hohen Luftströmungsgeschwindigkeit von bis zu 10 m/s der exakte Sensorwert abhängig von der gewünschten und zeitlich variablen Luftmenge, die zur Klimatisierung der Fahrzeugkabine erforderlich wäre. Zudem wird die Zuströmung durch die Einlassklappen des Klimagerätes in Abhängigkeit von der Stellung der Frischluftklappe beeinflusst, so dass eine inhomogene und zeitlich variable Anströmungssituation vorliegt.

Ausgehend hiervon liegt der Erfindung die Aufgabe zugrunde, eine Messanordnung zur Bestimmung eines Parameters eines durch einen Fluidströmungskanal strömenden fluiden Mediums anzugeben, bei welcher ein von einem Sensor der Messanordnung zu sensierender Volumenstrom des Mediums unabhängig von einer durch den Fluidströmungskanal variablen Luftmenge ist.

Diese Aufgabe wird gelöst durch eine Messanordnung mit den Merkmalen des Patentanspruches 1.

Eine solche Messanordnung zur Bestimmung wenigstens eines Parameters eines durch einen Fluidströmungskanal strömenden fluiden Mediums umfasst:
- eine zum Anordnen in dem strömenden Medium als Hohlkörper ausgebildete Sondenvorrichtung mit
   - einer den Hohlraum des Hohlkörpers verschließenden Anströmseite,
   - einer offenen Abströmseite, und
   - einer eine Strömungsablösung erzeugende äußere Kontur zur Erzeugung einer Rückströmung, und
- eine Sensoranordnung, welche zur Erzeugung eines von der Rückströmung durchströmten Messkanals über einen Fluidzufuhrkanal mit einer Einlassöffnung und über einen Fluidabfuhrkanal mit einer Auslassöffnung fluidverbunden ist.

Erfindungsgemäß ist vorgesehen, dass
- die eine Strömungsablösung erzeugende äußere Kontur an der Abströmseite des Hohlkörpers ist,
- der Hohlraum des Hohlkörpers mittels einer Trennwand in einen Fluideinströmraum und einen Fluidausströmraum geteilt ist,
- der Fluideinströmraum die mit dem Fluidzufuhrkanal verbundene Einlassöffnung aufweist, über welche die Rückströmung der Sensoranordnung zugeführt wird, und
- der Fluidausströmraum die mit dem Fluidabfuhrkanal verbundene Auslassöffnung aufweist, über welche die der Sensoranordnung zugeführten Rückströmung in den Fluidausströmraum zurückgeführt wird.

Mit dieser Sondenvorrichtung als passives Bauteil der Messanordnung wird eine Strömung des fluiden Mediums, wie bspw. Luft an der Einlassöffnung des Fluideinströmraums und an der Auslassöffnung des Fluidausströmraums mit konstantem Volumenstrom unabhängig von den Strömungsbedingungen innerhalb des Fluidströmungskanals sichergestellt.

Mit der Bereitstellung eines solchen konstanten Volumenstroms als Sensorvolumenstrom für die Sensoranordnung über den mit der Einlassöffnung des Fluideinströmraums verbundenen Fluidzufuhrkanal wird die Sensorgenauigkeit erhöht, ohne dass hierfür eine Steuerung oder Regelung zur Einstellung eines konstanten Volumenstroms erforderlich wäre.

Diese Sondenvorrichtung ist ein Hohlkörper mit einer geschlossenen Anströmseite und einer offenen Abströmseite und weist eine äußere Kontur auf, die im Nachlaufgebiet, also im Windschatten des Hohlkörpers zu einer Ablösung der Strömung des fluiden Mediums führt. In dem dadurch entstehenden Ablösegebiet im Bereich der offenen Abströmseite des Hohlkörpers entstehen Strömungswirbel bzw. Turbulenzen mit der Folge, dass zwischen dem Ablösegebiet und der Umströmung der Sondenvorrichtung keine zeitlich fixierte Trennstromlinie existiert, wodurch ein ausreichender Austausch zwischen dem Ablösegebiet und der Anströmung stattfindet und dadurch eine Rückströmung in die offene Abströmseite des Hohlkörpers entsteht.

Bei einer solchen Sondenvorrichtung wird eine direkte Anströmung der Einlassöffnung und der Auslassöffnung vermieden, da diese im Ablösegebiet der offenen Abströmseite des Hohlkörpers sich befinden und dort keine Störung der Strömung stattfindet. Eine direkte Anströmung einer Einlassöffnung und eine Auslassöffnung würde durch die Aufstauung zu einem erhöhten Druck und damit zu einem ungünstigen Einfluss auf das Durchströmungsverhalten eines Sensors führen. Ohne eine Regelung des Volumenstroms würde eine Aufstauung auf einer Einlassöffnung den Volumenstrom erhöhen, während eine Aufstauung auf der Auslassöffnung den Volumenstrom vermindern würde.

Mit der den Hohlraum des Hohlkörpers in einen Fluideinströmraum und einen Fluidausströmraum teilende Trennwand wird eine nachteilige Interaktion zwischen dem Ansaugen des fluiden Mediums und dessen anschließenden Zurückführung nach der Messung durch die Sensoranordnung vermieden, da durch die Trennwand eine direkte Anströmung der Einlassöffnung durch den die Auslassöffnung verlassenden Auslassstrahl unterdrückt wird.

Um eine besonders wirksame Ablösung des Fluidstromes entlang der Umfangsfläche des Hohlkörpers sicherzustellen ist weiterbildungsgemäß vorgebei, dass
- die Abströmseite des Hohlkörpers eine senkrecht zur Strömungsrichtung des strömenden fluiden Mediums gerichtete Abströmebene bildet, und
- die Abströmebene mit einer in Strömungsrichtung verlaufenden Umfangsfläche des Hohlkörpers eine zur Ablösung des strömenden Mediums führende Kante bildet.

Weiterhin ist es besonders vorteilhaft, den Hohlkörper als stumpfen Hohlkörper auszubilden, damit einen hohen Strömungswiderstand bzw. ein hohen Druckwiderstand zu realisieren.

Hierbei hat sich als besonders vorteilhaft erwiesen, den Hohlkörper topfförmig mit einer zylindrischen Umfangswand und einem die Anströmseite bildenden Topfboden auszubilden.

Vorzugsweise ist die Sensoranordnung mit einem die Luftqualität von Luft als fluides Medium messenden Sensor, insbesondere als Feinstaubsensor ausgebildet.

Die Messanordnung kann mit Vorteil für Fahrzeugklimaanlagen eingesetzt werden, bei welchen der Fluidströmungskanal als Frischluftkanal der Fahrzeugklimaanlage mit einer erfindungsgemäßen Messanordnung ausgebildet ist.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Figur 1: eine schematische Darstellung einer Messanordnung mit einer Sondenvorrichtung und einer Sensoranordnung gemäß der Erfindung in einem Frischluftkanal einer Fahrzeugklimaanlage,
- Figur 2: eine schematische Darstellung der Sondenvorrichtung gemäß Figur 1 mit einem Strömungsverlauf eines fluiden Mediums, und
- Figur 3: eine Schnittdarstellung der Sondenvorrichtung gemäß Schnitt A-A nach Figur 2.

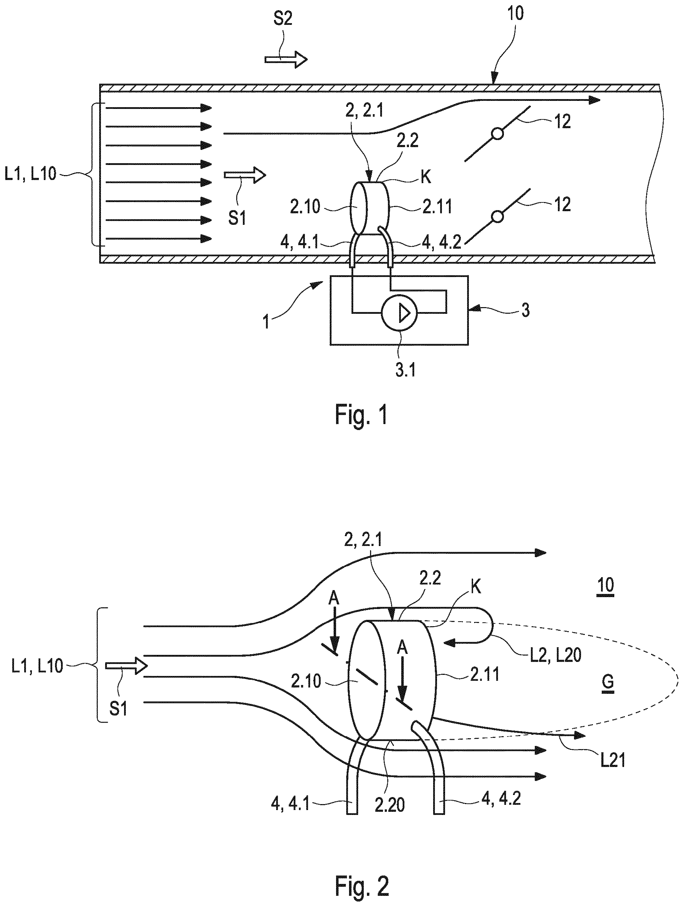

Die Figur 1 zeigt einen als Frischluftkanal ausgebildeten Fluidströmungskanal 10 einer Fahrzeugklimaanlage, welcher mit einer Messanordnung 1, bestehend aus einer Sondenvorrichtung 2 und einer Sensoranordnung 3 ausgerüstet ist. Hierbei ist die Sondenvorrichtung 2 einem in den Fluidströmungskanal 10 in Richtung S1 einströmenden fluiden Medium L1 ausgesetzt, welches einen Luftstrom L10, nämlich einen Frischluftstrom darstellt, welcher in Richtung S2 über verstellbare Frischluftregelklappen 12 in ein Klimagerät der Fahrzeugklimaanlage geführt wird.

Die Sondenvorrichtung 2 ist als passives Bauteil so ausgeführt, dass ein konstanter Sensorvolumenstrom unabhängig von den innerhalb des Fluidströmungskanals 10 herrschenden fluiddynamischen Zuständen von dem Luftstrom L10 abgezweigt und über einen Messkanal 4 einer Sensoranordnung 3 mit einem Sensor 3.1 als Feinstaubsensor zugeführt und wieder in den Fluidströmungskanal 10 zurückgeführt wird.

Diese Sondenvorrichtung 2 ist als Hohlkörper 2.1 mit einer Anströmseite 2.10 und einer Abströmseite 2.11 ausgebildet, wobei dieser Hohlkörper 2.1 derart in den Fluidströmungskanal 10 angeordnet ist, dass die Anströmseite 2.10 stromaufwärts in Bezug auf die Strömungsrichtung S1 und die Abströmseite 2.11 stromabwärts in Bezug auf die Strömungsrichtung S1 gerichtet ist.

Als Hohlkörper 2.1 der Sondenvorrichtung 2 ist dieser topfförmig mit einem Topfboden 2.22 und einer zylindrischen Umfangswand 2.21 ausgeführt, so dass der Topfboden 2.22 die Anströmseite 2.10 bildet und damit den Hohlraum 2.3 des Hohlkörpers 2.1 verschließt, während die gegenüberliegende Seite als Abströmseite 2.11 offen ist.

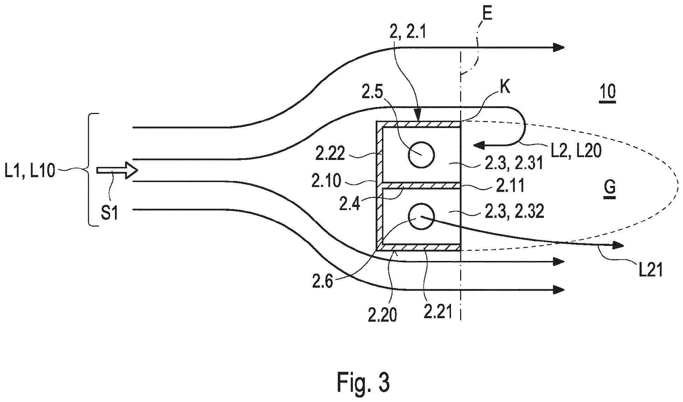

Der Luftstrom L10 trifft auf die Anströmseite 2.10 entsprechend den Figuren 2 und 3 und führt aufgrund der äußeren Kontur 2.2 des Hohlkörpers 2.1 im entstehende Nachlaufgebiet zu einer Strömungsablösung auf der Abströmseite 2.11 unter Ausbildung eines Ablösegebietes G.

Der Hohlkörper 2.1 weist daher eine äußere Kontur 2.2 auf, die zu dieser Strömungsablösung führt. Hierzu weist der Hohlkörper 2.1 einen hohen Strömungswiderstand und/oder einen hohen Druckwiderstand auf und ist als stumpfer Hohlkörper 2.1 ausgeführt.

Die Strömungsablösung wird durch eine unstetig verlaufende äußere Kontur 2.2 des Hohlkörpers 2.1 im Bereich der Abströmseite 2.11 erreicht. Damit liegt eine geometrieinduzierte Strömungsablösung vor. Die Abströmseite 2.11 des Hohlkörpers 2.1 steht senkrecht zur Strömungsrichtung S1 des Luftstromes L10 und bildet eine Abströmebene E, die mit einer Umfangsfläche 2.20 der zylindrischen Umfangswand 2.21 eine Kante K bildet, die eine Ablösung des Luftstroms L10 bewirkt.

In dem Ablösegebiet G entstehen Strömungswirbel bzw. Turbulenzen mit der Folge, dass zwischen dem Ablösegebiet G und der Umströmung der Sondenvorrichtung 2 keine zeitlich fixierte Trennstromlinie existiert, wodurch ein ausreichender Austausch zwischen dem Ablösegebiet G und der Anströmung stattfindet und dadurch eine Rückströmung L2 in die offene Abströmseite 2.11 des Hohlkörpers 2.1, d. h. also in dessen Hohlraum 2.3 entsteht. Dadurch können auch Schadstoffe des Luftstroms L10 auch im Ablösegebiet G gemessen werden.

Nach Figur 3 ist der Hohlraum 2.3 des Hohlkörpers 2.1 mittels einer Trennwand 2.4 in einen Fluideinströmraum 2.31 und einen Fluidausströmraum 2.32 geteilt. Der Fluideinströmraum 2.31 umfasst eine Einlassöffnung 2.5, während der Fluidausströmraum eine Auslassöffnung 2.6 aufweist, wobei sowohl die Einlassöffnung 2.5 als auch die Auslassöffnung 2.6 in der Umfangswand 2.21 des Hohlkörpers 2.1 angeordnet sind. Die Einlassöffnung 2.5 ist über einen Fluidzufuhrkanal 4.1 als Teil des Messkanals 4 mit dem Sensor 3.1 verbunden, über welchen die Rückströmung L2 als in den Fluideinströmraum 2.31 einströmender Luftstrom L20 zum Sensor 3.1 und anschließend über einen Fluidabfuhrkanal 4.2, welcher den Sensor 3.1 mit der Auslassöffnung 2.6 verbindet, wieder in den Fluidausströmraum 2.32 zurückgeführt wird und anschließend als aus dem Fluidausströmraum 2.32 ausströmender Luftstrom L21 zurück in den Fluidströmungskanal 10 geführt wird (vgl. Figuren 2 und 3).

Die Trennwand 2.4 vermeidet Interaktionen zwischen der Luftansaugung über die Einlassöffnung 2.5 und der anschließenden Eindüsung nach der Messung über die Auslassöffnung 2.6 zurück in den Fluidströmungskanal 10.

Die Einlass- und Auslassöffnung 2.5 bzw. 2.6 sind räumlich eng beieinander angeordnet, um ein Gebläse des Sensors 3.1 nicht durch eine hohe Druckdifferenz zu belasten und eine daraus resultierende Beeinträchtigung des Sensorvolumenstroms zu vermeiden.

Mit einer solchen Messanordnung 1 in einem Fluidströmungskanal 10 einer Fahrzeugklimaanlage wird die Feinstaubkonzentration des als Frischluftstrom zugeführten Luftstroms L10 ermittelt, wobei der über die Einlassöffnung 2.5 angesaugte Luftstrom L20 der Rückströmung L2 als Sensorvolumenstrom dem Sensor 3.1 als Luftqualitätssensor unabhängig von den Betriebsbedingungen innerhalb des Fluidströmungskanals 10 und damit als konstanter Volumenstrom zugeführt wird.

### BEZUGSZEICHEN:

- 1: Messanordnung
- 2: Sondenvorrichtung
- 2.1: Hohlkörper der Sondenvorrichtung 2
- 2.10: Anströmseite des Hohlkörpers 2.1
- 2.11: Abströmseite des Hohlkörpers 2.1
- 2.2: äußere Kontur des Hohlkörpers 2.1
- 2.20: Umfangsfläche des Hohlkörpers 2.1
- 2.21: Umfangswand des Hohlkörpers 2.1
- 2.22: Topfbodenteil des Hohlkörpers 2.1
- 2.3: Hohlraum des Hohlkörpers 2.1
- 2.31: Fluideinströmraum des Hohlkörpers 2.1
- 2.32: Fluidausströmraum des Hohlkörpers 2.1
- 2.4: Trennwand des Hohlkörpers 2.1
- 2.5: Einlassöffnung des Fluideinströmraums 2.31
- 2.6: Auslassöffnung des Fluidausströmraums 2.32

- 3: Sensoranordnung
- 3.1: Sensor

- 4: Messkanal
- 4.1: Fluidzufuhrkanal
- 4.2: Fluidabfuhrkanal

- 10: Fluidströmungskanal
- 12: Frischluftregelklappen

- E: Abströmebene
- G: Ablösegebiet
- L1: fluides Medium
- L10: Luftstrom
- L2: Rückströmung in das Ablösegebiet G

- L20: in den Fluideinströmraum 2.31 einströmender Luftstrom
- L21: aus dem Fluidausströmraum 2.32 ausströmender Luftstrom
- K: Kante des Hohlkörpers 2.1

## Patentansprüche

1. Messanordnung (1) zur Bestimmung wenigstens eines Parameters eines durch einen Fluidströmungskanal (10) strömenden fluiden Mediums (L1), umfassend:
- eine zum Anordnen in dem strömenden Medium (L1) als Hohlkörper (2.1) ausgebildete Sondenvorrichtung (2) mit
- einer den Hohlraum (2.3) des Hohlkörpers (2.1) verschließenden Anströmseite (2.10),
- einer offenen Abströmseite (2.11), und
- einer eine Strömungsablösung erzeugende äußere Kontur (2.2) zur Erzeugung einer Rückströmung (L2), und
- eine Sensoranordnung (3), welche zur Erzeugung eines von der Rückströmung (L2) durchströmten Messkanals (4) über einen Fluidzufuhrkanal (4.1) mit einer Einlassöffnung (2.5) und über einen Fluidabfuhrkanal (4.2) mit einer Auslassöffnung (2.6) fluidverbunden ist,
**dadurch gekennzeichnet, dass**
- die eine Strömungsablösung erzeugende äußere Kontur (2.2) an der Abströmseite (2.11) des Hohlkörpers (2.1) ist,
- der Hohlraum (2.3) des Hohlkörpers (2.1) mittels einer Trennwand (2.4) in einen Fluideinströmraum (2.31) und einen Fluidausströmraum (2.32) geteilt ist,
- der Fluideinströmraum (2.31) die mit dem Fluidzufuhrkanal (4.1) verbundene Einlassöffnung (2.5) aufweist, über welche die Rückströmung (L2) der Sensoranordnung (3) zugeführt wird, und
- der Fluidausströmraum (2.32) die mit dem Fluidabfuhrkanal (4.2) verbundene Auslassöffnung (2.6) aufweist, über welche die der Sensoranordnung (3) zugeführten Rückströmung (L2) in den Fluidausströmraum (2.32) zurückgeführt wird.

2. Messanordnung (1) nach Anspruch 1, bei welcher
- die Abströmseite (2.11) des Hohlkörpers (2.1) eine senkrecht zur Strömungsrichtung (S1) des strömenden fluiden Mediums (L1) gerichtete Abströmebene (E) bildet, und
- die Abströmebene (E) mit einer in Strömungsrichtung (S1) verlaufenden Umfangsfläche (2.20) des Hohlkörpers (2.1) eine zur Ablösung des strömenden Mediums führende Kante (K) bildet.

3. Messanordnung (1) nach Anspruch 1 oder 2, bei welcher der Hohlkörper (2.1) als stumpfer Hohlkörper ausgebildet ist.

4. Messanordnung (1) nach einem der vorhergehenden Ansprüche, bei welcher der Hohlkörper (2.1) topfförmig mit einer zylindrischen Umfangswand (2.21) und einem die Anströmseite (2.10) bildenden Topfboden (2.22) ausgebildet ist.

5. Messanordnung (1) nach einem der vorhergehenden Ansprüche, bei welcher die Sensoranordnung (3) mit einem die Luftqualität von Luft als fluides Medium messenden Sensor (3.1) ausgebildet ist.

6. Messanordnung (1) nach Anspruch 5, bei welcher der Sensor (3.1) als Feinstaubsensor ausgebildet ist.

7. Fluidströmungskanal (10), bei welchem der Fluidströmungskanal (10) als Frischluftkanal einer Fahrzeugklimaanlage mit einer Messanordnung (1) nach einem der vorhergehenden Ansprüche ausgebildet ist.

## Claims

1. Measuring arrangement (1) for determining at least one parameter of a fluid medium (L1) flowing through a fluid flow channel (10), comprising:
- a probe device (2) designed as a hollow body (2.1) to be arranged in the flowing medium (L1) and having
- an inflow side (2.10) closing the hollow chamber (2.3) of the hollow body (2.1),
- an open outflow side (2.11), and
- an outer contour (2.2) producing flow separation to generate a reverse flow (L2), and
- a sensor arrangement (3) which, to generate a measuring channel (4) through which the reverse flow (L2) flows, has a fluid connection to an inlet opening (2.5) via a fluid feed channel (4.1) and to an outlet opening (2.6) via a fluid discharge channel (4.2),
**characterised in that**
- the outer contour (2.2) producing flow separation is on the outflow side (2.11) of the hollow body (2.1),
- the hollow chamber (2.3) of the hollow body (2.1) is divided by a dividing wall (2.4) into a fluid inflow chamber (2.31) and a fluid outflow chamber (2.32),
- the fluid inflow chamber (2.31) has the inlet opening (2.5) connected to the fluid flow channel (4.1), via which inlet opening the reverse flow (L2) is fed to the sensor arrangement (3), and
- the fluid outflow chamber (2.32) has the outlet opening (2.6) connected to the fluid discharge channel (4.2), via which outlet opening the reverse flow (L2) fed to the sensor arrangement (3) is fed back into the fluid outflow chamber (2.32).

2. Measuring arrangement (1) according to claim 1, in which
- the outflow side (2.11) of the hollow body (2.1) forms an outflow plane (E) directed perpendicularly to the flow direction (S1) of the flowing fluid medium (L1), and
- the outflow plane (E) forms, with a circumferential surface (2.20) of the hollow body (2.1) extending in the flow direction (S1), an edge (K) leading to the separation of the flowing medium.

3. Measuring arrangement (1) according to claim 1 or 2, in which the hollow body (2.1) is designed as a bluff hollow body.

4. Measuring arrangement (1) according to any of the preceding claims, in which the hollow body (2.1) is pot-shaped with a cylindrical circumferential wall (2.21) and a pot base (2.22) forming the inflow side (2.10).

5. Measuring arrangement (1) according to any of the preceding claims, in which the sensor arrangement (3) is designed with a sensor (3.1) which measures the air quality of air as the fluid medium.

6. Measuring arrangement (1) according to claim 5, in which the sensor (3.1) is designed as a fine dust sensor.

7. Fluid flow channel (10), in which the fluid flow channel (10) is designed as a fresh air channel of a vehicle air conditioning system having a measuring arrangement (1) according to any of the preceding claims.

## Revendications

1. Système de mesure (1) permettant de déterminer au moins un paramètre d'un milieu fluide (L1) en cours de circulation dans un canal de circulation de fluide (10), comprenant :
- un dispositif formant sonde (2) réalisé sous forme de corps creux (2.1) et destiné à être agencé au sein du milieu (L1) en cours de circulation, comportant
- un côté d'attaque (2.10) obturant la cavité (2.3) du corps creux (2.1),
- un côté de fuite (2.11) ouvert, et
- un contour extérieur (2.2) générant un décollement de circulation afin de générer une circulation de reflux (L2), et
- un agencement de capteur (3) qui est en communication fluidique avec un orifice d'entrée (2.5) par l'intermédiaire d'un canal d'arrivée de fluide (4.1) et avec un orifice de sortie (2.6) par l'intermédiaire d'un canal d'évacuation de fluide (4.2), afin de générer un canal de mesure (4) parcouru par la circulation de reflux (L2),
**caractérisé en ce que**
- le contour extérieur (2.2) générant un décollement de circulation se trouve au niveau du côté de fuite (2.11) du corps creux (2.1),
- la cavité (2.3) du corps creux (2.1) est divisée en un espace d'admission de fluide (2.31) et en un espace d'écoulement de fluide (2.32) au moyen d'une paroi de séparation (2.4)
- l'espace d'admission de fluide (2.31) présente l'orifice d'entrée (2.5) relié au canal d'arrivée de fluide (4.1) et par lequel la circulation de reflux (L2) arrive à l'agencement de capteur (3), et
- l'espace d'écoulement de fluide (2.32) présente l'orifice de sortie (2.6) relié au canal d'évacuation de fluide (4.2) et par lequel la circulation de reflux (L2) arrivée à l'agencement de capteur (3) est renvoyée dans l'espace d'écoulement de fluide (2.32).

2. Système de mesure (1) selon la revendication 1, dans lequel
- le côté de fuite (2.11) du corps creux (2.1) forme un plan de fuite (E) orienté de manière perpendiculaire à la direction de circulation (S1) du milieu fluide (L1) en cours de circulation, et
- le plan de fuite (E) forme, avec une surface périphérique (2.20) du corps creux (2.1) s'étendant dans la direction de circulation (S1), un bord (K) provoquant le décollement du milieu en cours de circulation.

3. Système de mesure (1) selon la revendication 1 ou 2, dans lequel le corps creux (2.1) est réalisé sous la forme d'un corps creux tronqué.

4. Système de mesure (1) selon l'une quelconque des revendications précédentes, dans lequel le corps creux (2.1) est réalisé en forme de pot avec une paroi périphérique (2.21) cylindrique et un fond de pot (2.22) formant le côté d'attaque (2.10).

5. Système de mesure (1) selon l'une quelconque des revendications précédentes, dans lequel l'agencement de capteur (3) est réalisé avec un capteur (3.1) mesurant la qualité de l'air en tant que milieu fluide.

6. Système de mesure (1) selon la revendication 5, dans lequel le capteur (3.1) est réalisé sous la forme d'un capteur de poussières fines.

7. Canal de circulation de fluide (10), dans lequel le canal de circulation de fluide (10) est réalisé sous la forme d'un canal d'air extérieur d'une installation de climatisation de véhicule avec un système de mesure (1) selon l'une quelconque des revendications précédentes.
